(19) Europäisches Patentamt
European Patent Office
Office européen des brevets

(11) EP 0 621 293 B1

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.7: **C08F 299/00**, C08C 19/36, C10M 145/14

(21) Anmeldenummer: **94105648.3**

(22) Anmeldetag: **13.04.1994**

(54) **Kammpolymere**

Comb polymers

Polymères à structure en peigne

(84) Benannte Vertragsstaaten:
**AT BE CH DE DK ES FR GB IT LI NL SE**

(30) Priorität: **20.04.1993 DE 4312715**

(43) Veröffentlichungstag der Anmeldung:
**26.10.1994 Patentblatt 1994/43**

(73) Patentinhaber: **Röhm GmbH & Co. KG**
**64293 Darmstadt (DE)**

(72) Erfinder:
- **Omeis, Jürgen, Dr.**
  **D-64404 Bickenbach (DE)**
- **Pennewiss, Horst, Dr.**
  **D-64289 Darmstadt (DE)**

(56) Entgegenhaltungen:
**EP-A- 0 431 706**
**GB-A- 1 053 529**
**LU-A- 68 147**
**US-A- 4 085 168**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung

Die Erfindung betrifft Kammpolymere auf Basis von Olefin-Copolymer-Makromonomeren.

Stand der Technik

Polyalkyl(meth)acrylate, sogenannte PAMA, bewirken als Öladditive in gewisser Abhängigkeit vom Molekulargewicht und der Monomer-Zusammensetzung eine Anhebung des Viskositätsindex gepaart mit im Vergleich mit anderen Viskositätsindex-Verbesserern hervorragenden Tieftemperatureigenschaften. Grundvoraussetzung für die Anwendbarkeit als Öladditive ist in jedem Falle die Öllöslichkeit der Polymerisate. Im Falle der Polyalkyl(meth)acrylate beruht die Öllöslichkeit auf der Anwesenheit einer genügend großen Anzahl von Esteralkylseitenketten mit in der Regel $C \geq 10$.

Zur Anhebung des Viskositätsindex von Polalkylmethacrylaten ist man häufig dazu übergegangen, kurzkettige (Meth)acrylsäureester zu copolymerisieren, beispielsweise Methylmethacrylat oder Butylmethacrylat. Durch die kurzkettige Komponente wird aber die Löslichkeit bei tiefen Temperaturen herabgesetzt, so daß z.B. der Anteil an Methylmethacrylat auf ca. 20 Gew.-% beschränkt bleibt. Die Viskositätsindices liegen - je nach Scherstabilität und Grundöl - zwischen 150 und 250, wobei ein Molekulargewichtsbereich mit einem diesem entsprechenden Scherstabilitätsindex (SSI) von maximal 20 zugrunde gelegt wird.

Aufgabe und Lösung

Im Normalfall sind die Lösungsviskositäten von Polymerlösungen, insbesondere von Polymeren in Mineralölen in hohem Maße vom Molgewicht und der Molgewichtsverteilung abhängig, mit der Folge, daß die Verdickungswirkung ($\eta$ rel = relative Viskosität) und deren Temperaturabhängigkeit (Knäuelkontraktion) mit steigendem Molgewicht zunehmen (vgl. Rheological Properties of Lubricants, J. Briant, J. Denis, G. Parc, Ed., Editions Technip., Paris 1989.) Parallel dazu nimmt die Scherstabilität, d.h. der Kettenbruch unter hohem Schergefälle ab. Infolge dieser gegenläufigen Effekte sind z.B. scherstabile Viskositätsindexverbesserer, wie sie für Getriebe-, Hydraulik- und andere Motorenöl-Anwendungen gefragt sind, auf Basis konventioneller Polymertypen, wie z.B. auf PAMA-Basis, nur mit sehr hohen Zusatzmengen realisierbar.

Darüber hinaus wären Viskositätsindex-Verbesserer mit sehr niedrigem Viskositätsbeitrag bei tiefen Temperaturen und normaler Eindickung bei 40 bis 100 Grad C mit gleichzeitiger guter Öllöslichkeit im Tieftemperaturbereich von besonderem technischen Interesse. Derartige Viskositätsindexverbesserer würden u.a. den Einsatz höherviskoser Grundöle mit entsprechend geringerem Verdampfungsverlust bei hohen Temperaturen ermöglichen.

Es wurde nun gefunden, daß überraschenderweise die von der Technik angestrebten Eigenschaften von Kammpolymeren, hergestellt durch radikalische Copolymerisation von Alkyl(meth)acrylaten mit Makromonomeren vom Olefincopolymerisat (OCP-Typ) erbracht werden. Die Erfindung betrifft insbesondere Kammpolymere KP hergestellt durch radikalische Copolymerisation von hydrierten Olefin-Copolymer-Makromonomeren der Formel I

$$R_1 - [A]_n[A']_m\, CH_2CH_2 - O - \overset{O}{\overset{\|}{C}} - \overset{R'}{\overset{|}{C}} = CH_2 \qquad (I)$$

worin

R' für Wasserstoff oder Methyl

$R_1$ für den organischen Rest einer lithium-organischen Verbindung

[A] für ein Segment gebildet durch 1,4-Addition von gegebenenfalls mit einem C1 - C6-Alkylrest substituierten Butadien

[A'] für ein Segment gebildet durch Vinyladdition von gegebenenfalls mit einem C1 - C6-Alkylrest substituierten Butadien

und n + m für eine ganze Zahl von 7 bis 3000 steht

mit (Meth)acrylester-Monomeren der Formel II

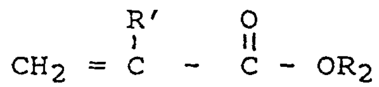
(II)

worin

R' für Wasserstoff oder Methyl und
$R_2$ für einen Alkylrest mit 1 bis 26 Kohlenstoffatomen steht
$R_1$ stammt, wie im weiteren gezeigt wird, aus dem bei der anionischen Polymerisation verwendeten lithiumorganischen Katalysator und bedeutet vorzugsweise einen Alkylrest mit 1 bis 6 Kohlenstoffatomen, oder einen Arylrest, mit bis zu 10 Kohlenstoffatomen insbesondere einen Butylrest, speziell einen n-Butylrest oder einen Phenylrest.

Besonders bevorzugt sind die Produkte der Formel (I) in denen die Segmente [A] bzw. [A'] vom Butadien bzw. Isopren abgeleitet sind, wobei erstere durch die Formel I-A oder I-A' dargestellt werden kann

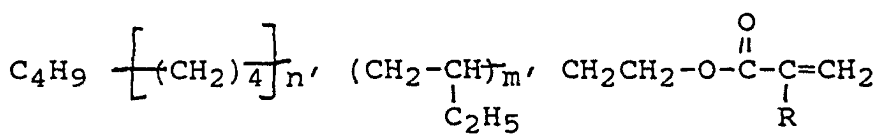
(I-A)

worin

R für Wasserstoff oder Methyl,
n' für eine ganze Zahl von größer als 0 bis 3000
und
m' für eine ganze Zahl von größer als 0 bis 3000 steht, mit der Maßgabe, daß n' + m' mindestens 10 und m' ≥ n' ist;

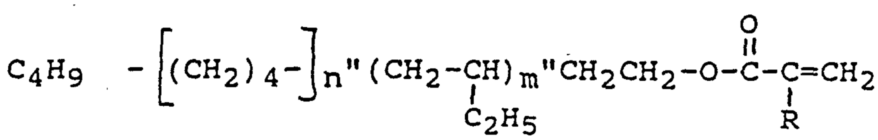
(I-A')

worin

R für Wasserstoff oder Methyl,
n" für eine ganze Zahl von größer als 0 bis 1500 und
m" für eine ganze Zahl mit m" ≥ n"

steht.

Weiter sind Segmente [A] bzw. [A'] abgeleitet von Styrol und Styrolderivaten, beispielsweise Alkylstyrolen, insbesondere methylsubstituierten Styrolen ebenfalls von Interesse. Als Comonomere der Formel II seien insbesondere Methylmethacrylat, Butylacrylat, 2-Ethylhexylacrylat, ein Gemisch aus n-C6 - C10-Alkylmethacrylat (aus Handelsprodukt LINCOL ® der Fa. Condea) C12 - C15-Alkylmethacrylat (aus Handelsprodukt DOBANOL® 25 L der Fa. Shell, Hamburg) genannt.

Ebenfalls können als Comonomere neben solchen der Formel II radikalisch polymerisierbare Monomere mit funktionellen Gruppen im Molekül, insbesondere solche, deren Dispergier/Detergenzaktivität in Öladditiven an sich bekannt ist, z.B. Verbindungen der Formel III

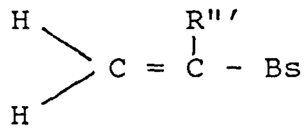

III

worin R''' Wasserstoff oder Methyl und Bs einen (inerten) heterocyclischen 5- oder 6-gliedrigen Ring oder einen Rest

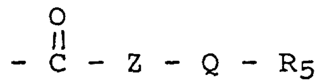

bedeutet, wobei Z für Sauerstoff oder einen Rest -NR4 und Q für eine gegebenenfalls alkylierte Kohlenwasserstoffbrücke mit insgesamt 2 bis 50 Kohlenstoffatomen, die durch Sauerstoffbrücken unterbrochen sein kann, vorzugsweise 2 bis 6 C-Brückengliedern, und $R_5$ für $-OR_6$ oder $-NR_7R_8$ steht, worin $R_6$ Wasserstoff oder einen Alkylrest mit 1 bis 24, vorzugweise 8 bis 22 Kohlenstoffatomen oder alkylsubstituierte Arylreste, insbesondere Phenylreste mit C1-C18-Alkylsubstituenten vorzugsweise mit C6-C16-Alkylsubstituenten und worin $R_7$ und $R_8$ jeweils für einen Alkylrest mit 1 bis 6 Kohlenstoffatomen stehen oder zusammen unter Einbeziehung des Stickstoffs und gegebenenfalls anderer Heteroatome einen heterocyclischen 5- oder 6-gliedrigen Ring bilden können und worin $R_4$ für Wasserstoff oder einen Alkylrest mit 1 bis 6 Kohlenstoffatomen steht. Unter anderen Heteroatomen seien neben Stickstoff Sauerstoff und/oder Schwefel verstanden. Genannt seien als heterocyclische Reste insbesondere Imidazole, Lactame, Carbazole und Vinylpyridine und deren substituierte Derivate, insbesondere C1-C4-Alkylderivate. Umfaßt seien als Verbindungen der Formel III somit Vinylimidazole, Vinyllactame, Vinylcarbazole und Vinylimidazole. Bevorzugt sind erfindungsgemäß Kammpolymere mit einem Gehalt von 5 - 80 Gew.-% OCP Makromonomere der Formel I und/oder der Formel IA, vorzugsweise 10 - 50 Gew.-% und mit 90 - 50 Gew.-% Alkyl(meth)acrylsäureestern der Formel II. Der Anteil der radikalisch polymerisierbaren Monomeren mit funktionellen Gruppen im Molekül liegt in der Regel im Bereich 0 bis 25 Gew.-%, vorzugsweise 0,5 bis 25, insbesondere 2 bis 20 Gew.-%, bezogen auf die Gesamtheit der Monomeren.

In Formel I betragen die bevorzugten Werte für n und m 10 bis 1000, mit der Maßgabe, daß der bevorzugte Wert für (n + m) im Bereich 10 bis 2000 liegt. Für die Formel I-A liegen die bevorzugten n' und m'-Werte im Bereich 10 bis 2 000, mit der Maßgabe, daß der bevorzugte Wert für (n'+m') im Bereich 10 bis 2000 liegen soll. Vorzugsweise liegen die Molekulargewichte $M_w$ der erfindungsgemäßen Kammpolymeren im Bereich 10 000 bis 500 000, insbesondere bei 20 000 bis 300 000 (Bestimmung durch SEC (size exclusion chromatography) mit PMMA Kalibrierung).

Herstellung der Makromonomeren der Formel I

Die Herstellung der Makromonomeren der Formel I kann unter Anwendung an sich bekannter Herstellungsverfahren erfolgen, wie am Beispiel des Butadiens erläutert sei. Ausgehend von dem gegebenenfalls substituierten Butadien stellt man in einem anionischen Polymerisationsschritt, vorzugsweise mit Butyllithium in einem geeigneten inerten Lösungsmittel LM wie z.B. Toluol, Hexan, Cyclohexan, THF sowie Mischungen daraus unter Abbruch der Polymerisation mit Ethylenoxid die Verbindung der Formel IV her:

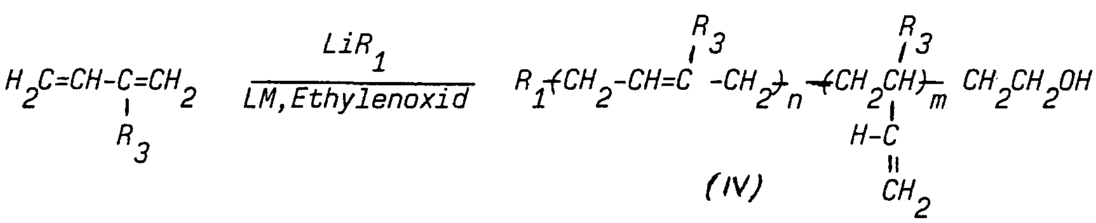


(IV)

(Formelschema a)

worin $R_3$ für Wasserstoff oder einen Alkylrest mit 1 bis 6 Kohlenstoffatomen steht und n, m und $R_1$ die vorstehend angegebenen Bedeutungen besitzen.

Die Verbindung der Formel IV wird in an sich bekannter Weise, beispielsweise durch katalytische Hydrierung mit Wasserstoff, vorzugsweise mit Palladium-Katalysatoren unter Druck (30 - 150 Atmosphären) zu dem gesättigten Alkohol der Formel V hydriert

(IV)

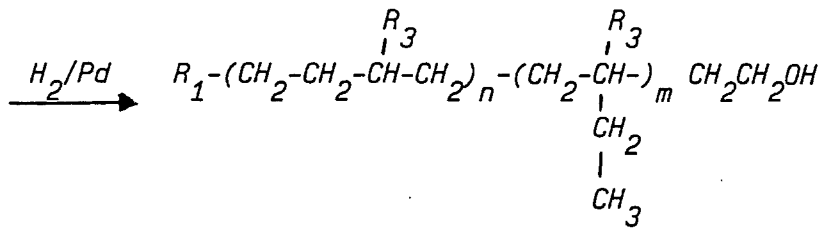


(V)

(Formelschema b; die Bedeutungen von R1 und R3 bleiben erhalten)

Der Alkohol der Formel V kann in ebenfalls bekannter Weise z.B. durch Umsetzung mit einem aktivierten (Meth)acrylsäurederivat der Formel VI

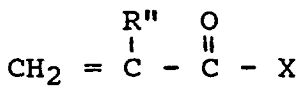

(VI)

worin X für Cl oder für einen Rest

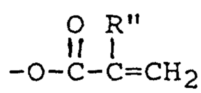

steht und worin R" für Wasserstoff oder Methyl steht oder durch Umesterung mit einem (Meth)acrylsäureester vorzugsweise in Gegenwart mindestens eines Polymerisationsinhibitors beispielsweise aus der Klasse der sterisch gehinderten Phenole, gewöhnlich in Mengen von 0,1 bis 1 Gew.-%, bezogen auf die Verbindungen der Formel V (vgl. H. Rauch-Puntigam, Acryl- und Methacrylverbindungen, Springer Verlag 1968, Ullmann's Encyclopedia of Industrial Chemistry 5th Ed. Vol. A20, pg 461-475, VCH 1992; R. Gaechter, H.M. Müller, Handbuch der Kunststoffadditive, Hanser Verlag, 1979) hergestellt werden.

Die Umsetzung wird vorzugsweise so durchgeführt, daß man die Verbindung der Formel V in einem (nicht mit Wasser mischbaren) inerten Lösemittel wie z.B. Methyl-tert.butylether oder einem arom. Lösemittel wie Toluol vorgibt und den Alkohol der Formel V, vorzugsweise in Gegenwart eines Säureakzeptors wie Pyridin, Triethylamin unter Rühren zutropft und über einen gewissen Zeitraum, beispielsweise 12 - 24 Stunden bei 25 Grad C reagieren läßt.

Die Aufarbeitung geschieht durch Fällen der Lösung in Ethanol (Verhältnis Lösemittel/Fällungsmittel ca. 1 : 10). Die Herstellung der Makromonomeren der Formel I kann auch in Anlehnung an US-A 5 2254 632 durch Umesterung erfolgen.

Mit dem oben dargestellten Verfahren lassen sich Molgewichte, Verteilungen und Mikrostruktur der Makromonomeren der Formel I definiert einstellen. Darüber hinaus wird eine gute Endgruppenfunktionalität ($f_{OH,MMA}$ > 90 %) erzielt.

Die Copolymerisation der Monomeren der Formeln I und II bzw. III kann z.B. als radikalinduzierte Lösungsmittelpolymerisation in an sich bekannter Weise durchgeführt werden (vgl. H. Rauch-Puntigam, Th. Völker, Acryl- und Methacrylverbindungen loc.cit.).

Kleinere Ansätze können z.B. im Schlenk-Gefäß durchgeführt werden, bei größeren Ansätzen verwendet man einen Reaktor mit Rührwerk, Gaseinleitungsvorrichtung und Heizung. Man löst das Makromonomer der Formel I und das Monomer der Formel II in einem geeigneten inerten Lösemittel L, wie beispielsweise in Toluol, Xylol, so daß

etwa 50 %ige Lösungen vorliegen. Bei einem typischen Ansatz setzt man die Monomerkomponenten im Gewichtsverhältnis 1 : 1 ein. Durch Zugabe von Trockeneis bzw. etwa zehnminütiges Einleiten von Stickstoff wird entgast. Man erwärmt zweckmäßig etwa bis zum Erreichen der Polymerisationstemperatur, beispielsweise auf 77 Grad C und gibt den Initiator zu, beispielsweise in einer 1 %igen Lösung im Lösemittel L. Als Initiatoren kommen an sich bekannte Initiatoren, beispielsweise Azo-Initiatoren, wie Azo-bis-isobutyronitril (AIBN) ferner Perverbindungen in den üblichen Mengen, beispielsweise 0,1 bis 1 Gew.-%, bezogen auf die Monomeren, infrage. Zweckmäßig wird noch Initiator in gewissen Abständen, beispielsweise nach 4 und nach 6 Stunden nachgefüttert. Die Gesamtpolymerisationsdauer liegt gewöhnlich im Bereich eines Tages.

Zur Aufarbeitung kann das gebildete Kammpolymer KP mit einem Fällungsmittel wie z.B. Methanol gefällt werden.

Bei der Herstellung der Makromonomeren der Formel I kann wie folgt verfahren werden. Die anionische Polymerisation von Polybutadien mittels lithiumorganischer Verbindungen ist Stand der Technik (vgl. H.F. Mark et al. Encyclopedia of Polymer Science & Engineering 2nd Ed. Vol. 2, 562 - 567, J. Wiley 1985, Houben-Weyl, Methoden der Organischen Chemie, Bd. XIV/1, S. 643 - 660, Georg Thieme 1961). Bewährt hat sich zum Beispiel die Verwendung von Butyllithium in Heptan, wobei in der Regel 40 - 50 % an trans- und cis- und ca. 5 - 10 % Vinylverbindungen gebildet werden. Man hält das Molekulargewicht gewöhnlich unterhalb 5 000. Die Reaktion kann z.B. in absol. Toluol, dem man unter den üblichen Vorsichtsmaßnahmen die Lösung des Butyllithiums, wie z.B. n-Butyllithium oder sec. Butyllithium, als Anhalt sei eine ca. 12 %ige Lösung genannt, zusetzt, sowie die zur Regelung der Mikrostruktur für den gewünschten Bereich erforderliche Menge eines Reglers wie z.B. Tetrahydrofuran. Dazu kondensiert man das Dien (s. Formelschema a) in der Regel unter Kühlung z.B. im Bereich -20 bis 0 Grad C. Nach Entfernen der Kühlung und Erreichen der Raumtemperatur verläuft die Reaktion meist exotherm. Im Falle des Butadiens werden z.B. Temperaturspitzen bis zu 80 Grad C erreicht. Es empfiehlt sich in vielen Fällen, zur Vervollständigung der Reaktion bis etwa eine Stunde zu erwärmen, als Anhaltspunkt seien 60 Grad C genannt. Man kühlt dann zweckmäßig, beispielsweise auf -5 Grad C und dosiert Ethylenoxid beispielsweise in Tetrahydrofuran zu. Reaktion mit Ethylenoxid ergibt in bekannter Weise Kettenterminierung:

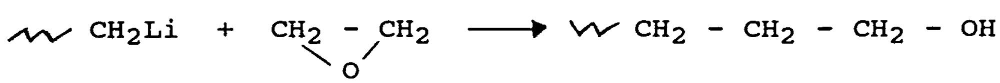

Man läßt in der Regel noch nachreagieren, beispielsweise etwa 20 Stunden.Zur Aufarbeitung, zweckmäßigerweise unter einem Inertgas wie Argon wird angesäuert, beispielsweise mit konz. Salzsäure und vorzugsweise mit Wasser neutral gewaschen; ggfls. kann einer sich bildenden Emulsion durch Zugabe geeigneter brechender Mittel wie z.B. Ether oder Natriumchlorid begegnet werden.

Zur weiteren Aufarbeitung der so hergestellten Verbindungen der Formel IV kann beispielsweise über Magnesiumsulfat getrocknet, anschließend filtriert und im Rotationsverdampfer eingeengt werden. Die abschließende Trocknung der Rückstände kann z.B. im Vakuumtrockenschrank bei Raumtemperatur erfolgen.

Durch anionische Polymerisation des Diens mit einer lithiumorganischen Verbindung als Initiator in einem geeigneten Lösemittel wie Toluol kann somit unter Zudosierung definierter Mengen an Tetrahydrofuran (THF) die gewünschte Mikrostruktur eingestellt werden. Die erforderliche Menge an THF ist molekulargewichtsabhängig, da das gewünschte Strukturverhältnis bei einem molaren THF/Initiator-Verhältnis von 3 : 1 bis 1 : 1 erhalten wird.

Die heterogene Hydrierung der Verbindung der Formel IV zum gesättigten Alkohol der Formel V kann ebenfalls analog den Verfahren des Standes der Technik erfolgen, vorzugsweise im Hochdruckautoklaven (mit Rührung und Heizung) in einem geeigneten flüssigen Medium wie THF und in Gegenwart eines metall. Hydrierungskatalysators wie z.B. Palladium, vorzugsweise auf einem Calciumcarbonatträger. Man verwendet vorteilhafterweise 5 - 10 %ige Polymerlösungen in THF und - als Anhalt - einen Wasserstoffdruck von 50 bar. Es hat sich als zweckmäßig erwiesen, nach beobachtetem Druckabfall und Erreichen der Temperaturkonstanz noch aufzuheizen, beispielsweise auf 120 Grad C und über einen gewissen Zeitraum, beispielsweise 18 Stunden hinweg zu hydrieren. Die Aufarbeitung geschieht in der üblichen Weise.

Die Acylierung des Alkohols der Formel V zum (Meth)acrylsäureester kann im Prinzip mit den üblichen aktivierten (Meth)acrylsäurederivaten wie z.B. den Verbindungen der Formel VI erfolgen. Die Reaktion wird gewöhnlich in einem geeigneten Gefäß, z.B. einem Dreihals-Rundkolben mit Rückflußkühler (Calciumchloridrohr) Magnetrührer und Innenthermometer durchgeführt. Üblicherweise läßt man in Anwesenheit eines Säureakzeptors wie z.B. Triethylamin reagieren. Man gibt zweckmäßig die in einem geeigneten, inerten Lösungsmittel wie z.B. Diethylether gelösten Polymeren (etwa 10 %ig) vor und versetzt mit dem Säureakzeptor, gewöhnlich im molaren Verhältnis 1 : 1,1 bezogen auf die Verbindung der Formel VI. Dann gibt man unter Rühren die Verbindung der Formel VI, vorzugsweise Methacrylsäurechlorid im äquimolaren Verhältnis zur Verbindung V zu. Es empfiehlt sich der Zusatz eines Polymerisationsinhibitors (vgl. H. Rauch-Puntigam, Th. Völker, Chemie der Acryl- und Methacrylverbindungen, Springer-Verlag 1967), beispielsweise vom Typ der Hydrochinonderivate wie z.B. dem Hydrochinonmonomethylether in ppm-Mengen; als Anhalt seien 50 ppm genannt.
Man läßt über einen größeren Zeitraum, beispielsweise 18 Stunden bei Raumtemperatur reagieren. Die Aufarbeitung erfolgt durch Abfiltrieren des ausgefallenen Salzes, beispielsweise des Triethylammoniumhydrochlorids, anschließendes Waschen der organ. Phase mit Wasser um sie zu neutralisieren, Fällung der Verbindung I mit z.B. Methanol oder Einengen am Rotationsverdampfer und Trocknen.

Vorteilhafte Wirkungen

Die Vorteile der erfindungsgemäßen Kammpolymere KP liegen unter anderem in dem besonders günstigen Tieftemperaturverhalten bei Verwendung als Öladditive. So hat zum Beispiel ein Kammpolymer mit 10 - 20 Gew.-% OCP-Makromonomer-Anteil (Formel I) und 80 - 90 Gew.-% Alkyl(meth)acrylat (Formel II) mit C1- C10-Alkylestern als Viskositätsindexverbesserer einen Scherstabilitätsindex SSI = 20, bei einem Viskositätsindex von >300 und eine eindickende Wirkung bei -25 Grad C um den Faktor 1,5 ($\eta$ rel = 1,5). Durch geeignete Wahl der Comonomeren bzw. der Verfahrensparameter lassen sich Kammpolymere KP mit einer weitgehend homogenen Verteilung der Seitenäste herstellen.
Die Vorteile der vorliegenden Verbindungsklasse sind auch bei relativ hochmolekularen Vertretern vorhanden. So wurde gefunden, daß sich OCP-Makromonomere bis zu einem Molekulargewicht $M_n$ von ca. 150 000 g/mol in konzentrierter Lösung mit Alkyl(meth)acrylaten, beispielsweise der Formel II, copolymerisieren lassen.
In gewisser Abhängigkeit vom Molgewicht der Makromonomeren der Formel I, der Zusammensetzung der Kammpolymeren und dessen app. Molgewicht erhält man gut verdickende Produkte KP - gewöhnlich um einen Faktor 1,5 - 2 wirksamer als PAMA -im Scherstabilitätsbereich SSI = 10 - 20.
Die folgenden Beispiele dienen zur Erläuterung der Erfindung.

BEISPIELE

Der Scherstabilitätsindex SSI wird nach ASTM 2603 bestimmt. Der Viskositätsindex VIB kann nach DIN 51564 / ISO 2909 bestimmt werden.
Die Bestimmung des apparenten Molekulargewichts $M_w$ erfolgt mittels Size Exclusion Chromatographyl (SEC) mit PMMA-Eichung (vgl. Ullmann's Encyclopedia of Industrial Chemistry 5th Ed. Vol. A <u>20</u>, 520 - 533, VCH 1992).
Die Uneinheitlichkeit U wird nach der Formel

$$U = \frac{Mw}{M_n} - 1$$

erhalten.
Die Bestimmung der Lösungseigenschaften wird im Kapillarviskosimeter nach ASTM-D 445 vorgenommen. (In PAO4 zwischen 100 Grad und -20 Grad C.) Als Maß der Verdickungswirkung wird der Quotient $\eta$ Lösung/ $\eta$ Lösungsmittel = rel (= relative Viskosität angegeben, wobei, sofern nicht extra vermerkt, KV (100) auf 12,1 $^+$ O,1 $mm^2/s$ in PAO4 / KV (100) = 3,88 $mm^2/s$) eingestellt wurde.

A. Allgemeine Herstellungsvorschrift für die Kammpolymeren KP

Apparatur: für 100 g Ansätze verwendet man einen 250 ml Vierhals-Schwanenkolben, ein KPG-Säbelrührwerk, Thermometer, Rückflußkühler, Gaseinleitungsrohr für Stickstoff, Ölbadheizung.
Für kleinere Ansätze (z.B. 10 - 20 g) kommen Schlenkgefäße, bestehend aus einem zylindrischen Glasgefäß (Länge = 20 cm, Durchmesser = 3 cm) mit Hahn und Gummispetum bei magnetischer Rührung zur Anwendung.

Durchführung der Polymerisation:

Ansatz: Insgesamt 100 g, 50 %ig in Toluol davon

| | |
|---|---|
| 50 Gew.-Tle. | Makromonomer der Formel I = 25 g |
| 50 Gew.-Tle. | Monomer der Formel II = 25 g |

(fortgesetzt)

| | |
|---|---|
| 0,3 Gew.-% | 2,2'Azobis-(isobutyronitril), einprozentig in Toluol = 15 g |

Das Makromonomer der Formel I und die Comonomeren der Formel II werden in 50 %iger Lösung in Toluol vorgelegt. Man entgast durch Eintragen von Trockeneis bzw. durch zehnminütiges Einleiten von Stickstoff. Nach Erreichen der Polymerisationstemperatur (Richttemperatur = 77 Grad C) wird eine einprozentige Initiatorlösung (2,2'-Azobis(isobutyronitril) in Toluol) zugegeben. Nach 4 bis 6 Stunden wird jeweils die Hälfte an Initiatorlösung nachgefüttert. Die Gesamt-Polymerisationsdauer beträgt 24 Stunden.

Isolierung der Kammpolymeren KP.

Nach erfolgter Probenentnahme (ca. 2 g) für die Analytik werden die Ansätze mit ca. 1 l Methanol gefällt und die Rückstände 24 Stunden bei 80 Grad C im Vakuumtrockenschrank getrocknet.
Bestimmung der Lösungseigenschaften wie oben angegeben nach ASTM-D 445 kapillarviskosimetrisch.
Nach der allgemeinen Herstellungsvorschrift unter A wurden die folgenden Kammpolymere KP hergestellt:

Beispiel KP-1

Copolymerisat hergestellt aus 40 Gew.-% 2-Ethylhexylacrylat, 40 Gew.-% Butylacrylat und 20 Gew.-% Makromonomer der Formel I-2: $M_w$ = 294000 g/mol und U = 2,8; VIB = 300 (8,2 % in PAO 4), Rest-Makromonomeranteil = 3,6 %.

Beispiel KP-2

Copolymerisat hergestellt aus 50 Gew.-% 2-Ethylhexylacrylat, 40 Gew.-% Butylacrylat und 10 Gew.-% Makromonomer der Formel I-2: $M_w$ = 299000 g/mol; U = 3,8; VIB = 339 (8,7 % in PAO 4).

Beispiel KP-3

Copolymerisat hergestellt aus 60 Gew.-% n-C6-C10-Alkylmethacrylat (Lincol® 610), 20 Gew.-% Butylmethacrylat und 20 Gew-% Makromonomer der Formel I-3:
$M_w$ = 247000 g/mol; U = 1,66; VIB = 260 (6,7 Gew.-% in PAO 4).

Beispiel KP-4

Copolymerisat hergestellt aus 50 Gew.-% n-C6-C10-Alkylmetharylat, 30 Gew.-% Butylmethacrylat und 20 Gew.-% Makromonomer I-3:
$M_w$ = 235000 g/mol; U = 1,76; VIB = 287 (7,0 Gew.-% in PAO 4).

Beispiel KP-5

Copolymerisat hergestellt aus 50 Gew.-% n-C6-C10-Alkylmethacrylat, 40 Gew.-% Butylmethacrylat und 10 Gew.-% Makromonomer I-3:
$M_w$ = 222000 g/mol; U = 1,45; VIB = 318 (8,0 Gew.-% in PAO 4)

Beispiel KP-6

Copolymerisat hergestellt aus 40 Gew.-% Methylmethacrylat und 60 Gew.-% Makromonomer I-1:
$M_w$ = 119000 g/mol; U = 8.

Beispiel KP-7

Copolymerisat hergestellt aus 20 Gew.-% Methylmethacrylat und 80 Gew.-% Makromonomer I-1:
$M_w$ = 171000, U = 9.

Beispiel KP-8

Copolymerisat hergestellt aus 40 Gew.-% Butylacrylat und 60 Gew.-% Makromonomer I-2: $M_w$ = 325000 g/mol; U = 4; VIB = 284 (5,9 Gew.-% in PAO 4).

Beispiel KP-9

Copolymerisat hergestellt aus 40 Gew.-% Methylmethacrylat und 60 Gew.-% Makromonomer I-4: $M_w$ = 269000 g/mol; U = 5,9; VIB = 196 (3,5 Gew.-% in PAO 4).

Vergleichsbeispiele ohne Makromonomere

Beispiel V-1

Poly-n-Decylmethacrylat $M_w$ = 266000 g/mol; U = 2,22; VIB = 260 (7,0 Gew.-% in PAO 4).

Beispiel V-2

Homopolymer eines C12 - C15-Alkyl-Methacrylats (aus DOBANOL ® 25 L) $M_w$ = 274000 g/mol; U = 1,59; VIB = 227 (7,7 Gew.-% in PAO 4).

Beispiel V-3

Copolymerisat aus 85 Gew.-% C15 - C15-Alkylmethacrylat (aus DOBANOL® 25 L) und 15 Gew.-% Methylmethacrylat.

Die für die Additivwirkung relevanten Eigenschaften der hergestellten Produkte gehen aus der folgenden Tabelle hervor.

TABELLE

Relative Viskositäten der Kammpolymeren und vergleichbarer linearer PMMAs, bestimmt in PAO 4 in einem Temperaturbereich von -20 Grad C bis 100 Grad C, mit einer kinematischen Lösungs-Viskosität von 12,1 $mm^2/s$ bei 100 Grad C.

| *Beisp.* | *Konz. (Gew.-%)* | *η rel in $mm^2/s$ bei* | | | | | |
|---|---|---|---|---|---|---|---|
| | | *100°C* | *40°C* | *0°C* | *-10°C* | *-20°C* | *SSI (ASTM 2603)* |
| *KP-1* | *8, 2* | *3, 09* | *2,44* | *1,95* | *1,85* | *1,55* | *21,0* |
| *KP-2* | *8,7* | *3,11* | *2,19* | *1,82* | *1,62* | *1,57* | *22,7* |
| *KP-3* | *6,7* | *3,11* | *2,81* | *2,35* | *2, 22* | *2, 05* | *23,2* |
| *KP-4* | *7, 0* | *3, 05* | *2,51* | *2, 27* | *2,16* | *2, 00* | *19,8* |
| *KP-5* | *8, 0* | *3, 05* | *2, 27* | *2, 03* | *1,92* | *1,82* | *18,9* |
| *KP-6* | *5,0** | 1,60 | *1,59* | *1,91* | *1,79* | *1,73* | *n. b.* |
| *KP-7* | *10,9** | *2,18* | *2, 02* | *2,44* | *2,33* | *2,42* | *n. b.* |
| *KP-8* | *5,9* | *3,10* | *2, 60* | *2, 40* | *2,35* | *2, 25* | *21,2* |
| *KP-9* | *3,5* | *3, 06* | *3,56* | *4,41* | *4,43* | *4,56* | *20,5* |
| *V-1* | *7, 0* | *3,10* | *2,80* | *2,59* | *2, 62* | *2,40* | *32,3 DIN 51382* |
| *V-2* | *7,7* | *3,14* | *3, 24* | *3,39* | *3, 29* | *3,15* | *29,3 DIN 51382* |
| *V-3* | *9,5* | *3,10* | *2,80* | *2,70* | *2, 60* | *2,70* | *7, 0* |

**KV (100) < 12,1 $mm^2/s$*

B. Allgemeine Herstellungsvorschrift für die Makromonomeren der Formel I

B-1:

Anionische Polymerisation zur Verbindung der Formel IV

Unter inerten Bedingungen werden ca. 1 200 ml Toluol über Benzophenon-Natrium direkt in das Reaktionsgefäß destilliert. Dazu gibt man mittels gasdichter Spritzen den Initiator, z.B. eine 12 %ige Lösung von n-Butyllithium in n-Hexan und diskrete Mengen absoluten Tetrahydrofurans als Regler. Anschließend wird über Dibutylmagnesium getrocknetes Butadien bei zunächst -20 Grad C und dann bei 0 Grad C zukondensiert. Nach Beendigung der Butadien-Kondensation wird das Kühlbad entfernt. Nach Erwärmen auf Raumtemperatur verlaufen die Ansätze meist exotherm. Es werden Temperaturen von bis zu 80 Grad C erreicht. Zur Vervollständigung der Polymerisation erhitzt man bei der Mehrzahl der Ansätze etwa 30 bis 60 Minuten lang auf 60 Grad C.
Zwecks OH-Terminierung wurde mit Eiswasser auf < 5 Grad C abgekühlt und eine Lösung von Ethylenoxid in Tetrahydrofuran zudosiert. Man läßt noch etwa 20 Stunden bei Raumtemperatur nachreagieren. Von der Zugabe des Ethylenoxids entnimmt man zweckmäßig eine Probe zur Bestimmung des Molekulargewichts des nicht funktionalisierten Anteils.

Zur Aufarbeitung werden die Ansätze unter Argongas abgedrückt, mit konz. Salzsäure angesäuert, mit Wasser neutral gewaschen (wobei bei Bildung von Emulsionen Ether oder Natriumchlorid zugefügt wird) über Magnesiumsulfat getrocknet, filtriert, im Rotationsverdampfer eingeengt und die Rückstände im Vakuumtrockenschrank bei Raumtemperatur getrocknet.
Die gewünschte Mikrostruktur wird bei der anionischen Polymerisation von Butadien mit n-Butyllithium oder sec.-Butyllithium als Initiator in Toluol als Lösemittel durch Zudosierung definierter Mengen Tetrahydrofuran als Regler eingestellt. Die benötigte Menge Tetrahydrofuran korrespondiert daher mit dem Molekulargewicht. Das gewünschte Strukturverhältnis wird bei einem molaren Verhältnis Tetrahydrofuran: Initiator von 1 : 1 bis 3 : 1 erhalten.
Gemäß der allgemeinen Herstellungsvorschrift werden beispielsweise die in der folgenden Tabelle charakterisierten Makromonomeren der Formel I hergestellt:

TABELLE

| Charakterisierung der Makromonomeren | | | | | | |
|---|---|---|---|---|---|---|
| | *Bezeichnung* | $M_{W,th}$ | *$M_W$, SEC | *U ** | *f, OH, HPLC ***f* | *MMA* |
| *Makromonomer* | *I-1* | 1 000 | 2 490 | 0, 07 | 0, 98 | 1,0 |
| | *I-2* | 5 000 | 9 100 | 0, 07 | 0, 94 | 0, 95 |
| | *I-3* | 10 000 | 29 000 | 0, 04 | 0, 88 | 0, 90 |
| | *I-4* | 40 000 | 148 000 | 0,19 | 0, 95 | --- |

** SEC = Size Exclusion Chromatography*

*** U = Uneinheitlichkeit*

***f = Funktionalität charakterisiert durch HPLC (maximaler Wert = 1)

B-2:

Hydrierung des hydroxy-terminierten Polybutadien IV zur Verbindung der Formel V.

Die Hydrierung kann z.B. in einem 21-Hochdruckautoklaven mit Rührvorrichtung und Heizung vorgenommen werden.

| Bedingungen | |
|---|---|
| Druck | 50 bar $H_2$ |
| Temperatur | 120 Grad C |
| Dauer | 18 Stunden |
| Rührung | 1 200 U/Min. |
| Katalysator | Palladium auf Calciumcarbonatträger (Pd) |

Zunächst werden 5 - 10 %ige (Gew.) Polymerlösungen in Tetrahydrofuran im Autoklav vorgelegt. Dann wird

mehrfach durch Aufdrücken von 10 bar Stickstoff gespült und 50 bar Wasserstoff aufgedrückt. Schon nach wenigen Minuten (ca. 5 Minuten) tritt Druckabfall (auf ca. 20 bar) ein. Nach Konstantwerden des Drucks wird auf 120 Grad C hochgeheizt und 18 Stunden bei dieser Temperatur belassen. Zur Aufarbeitung wurden die (schwarz-gefärbten) Ansatzlösungen von dispergiertem Katalysatorpulver zentrifugiert bzw. unter Druck filtriert, die klaren Lösungen im Rotationsverdampfer eingeengt und die Rückstände im Vakuumtrockenschrank bei 80 Grad C getrocknet.

B-3:

Acylierung des hydroxyterminierten hydrierten Polybutadiens mit Methacrylsäurechlorid zur Verbindung der Formel I bzw. I-A.

Die Umsetzung der Verbindungen der Formel V kann in einem Dreihals-Rundkolben mit Rückflußkühler mit aufgesetztem Calciumchloridrohr, Magnetrührung und Innenthermometer durchgeführt werden.
Die Polymeren werden in absol. Diethylether gelöst (10 Gew.-%) im Reaktionskolben vorgelegt und mit Triethylamin versetzt. Anschließend wird bei Raumtemperatur Methacrylsäurechlorid im molaren Verhältnis 1 : 1,1 zugesetzt, wobei die Lösungen eintrüben. Die beobachtete Wärmetönung liegt zwischen 1 und 3 Grad C. Man fügt zweckmäßig dem Ansatz zur Stabilisierung Hydrochinonmonomethylether (50 ppm) zu und läßt insgesamt ca. 18 Stunden bei Raumtemperatur reagieren. Zur Aufarbeitung wird vom ausgefallenen Triethylaminhydrochlorid abfiltriert, mit Wasser neutral gewaschen und das Makromonomer mit Methanol gefällt bzw. am Rotationsverdampfer eingeengt und die Rückstände im Vakuumtrockenschrank bei Raumtemperatur getrocknet.

## Patentansprüche

1. Kammpolymere auf Basis von Olefin-Copolymer-Makromonomeren,
   **dadurch gekennzeichnet,**
   **daß** man hydrierte Olefin-Copolymer-Makromonomere der Formel I

$$R_1 - [A -]_n [A' -]_m CH_2CH_2 - O - \overset{O}{\overset{\|}{C}} - \overset{R'}{\overset{|}{C}} = CH_2 \qquad (I)$$

   worin

   R' für Wasserstoff oder Methyl
   $R_1$ für den organischen Rest einer lithium-organischen Verbindung
   [A] für ein Segment gebildet durch 1,4-Addition von gegebenenfalls mit einem C1 - C6 Alkylrest substituierten Butadien
   [A'] für ein Segment gebildet durch Vinyladdition von gegebenenfalls mit einem C1 - C6 Alkylrest substituierten Butadien
   und n + m für eine ganze Zahl von 7 bis 3000 steht, mit (Meth)acrylester-Monomeren der Formel II

$$CH_2 = \overset{R'}{\overset{|}{C}} - \overset{O}{\overset{\|}{C}} - OR_2 \qquad (II)$$

   worin

   R' für Wasserstoff oder Methyl und
   R2 für einen Alkylrest mit 1 bis 26 Kohlenstoffatomen steht in radikalischer Polymerisation copolymerisiert.

2. Kammpolymere gemäß Anspruch 1, **dadurch gekennzeichnet, daß** außer den (Meth)acrylester-monomeren der Formel II noch Monomere mit funktionellen Gruppen im Molekül der Formel III

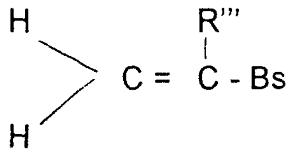 (III)

worin R''' Wasserstoff oder Methyl und Bs einen (inerten) heterocyclischen 5- oder 6-gliedrigen Ring oder einen Rest

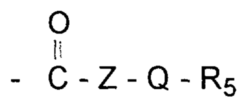

bedeutet, wobei Z für Sauerstoff oder einen Rest - $NR_4$ und Q für eine gegebenenfalls alkylierte Kohlenwasserstoffbrücke mit insgesamt 2 bis 50 Kohlenstoffatomen, die durch Sauerstoffbrücken unterbrochen sein kann, vorzugsweise 2 bis 6 C-Brückengliedern, und $R_5$ für $OR_6$ oder $-NR_7R_8$ steht, worin $R_6$ für Wasserstoff oder einen Alkylrest mit 1 bis 24 Kohlenstoffatomen oder alkylsubstituierte Arylreste mit C1 bis C18-Alkylsubstutenten und worin $R_7$ und $R_8$ jeweils für einen Alkylrest mit 1 bis 6 Kohlenstoffatomen stehen oder zusammen unter Einbeziehung des Stickstoffs und gegebenenfalls andere Heteroatome einen heterocyclischen 5- oder 6-gliedrigen Ring bilden können und worin $R_4$ für Wasserstoff oder einen Alkylrest mit 1 bis 6 Kohlenstoffatomen steht, in Mengen von 0,5 bis 25 Gew.-% bezogen auf die Gesamtheit der Monomeren copolymerisiert werden.

**3.** Kammpolymere gemäß den Ansprüchen 1 und 2, **dadurch gekennzeichnet, daß** als Olefin-Copolymer-Makromonomer ein solches der Formel I-A

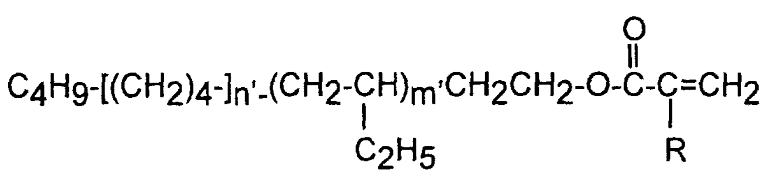 (I-A)

worin

R für Wasserstoff oder Methyl,
n' für eine ganze Zahl von größer als 0 bis 3000 und
m' für eine ganze Zahl von größer als 0 bis 3000 steht,

mit der Maßgabe, daß $n' + m' \geq 10$ und $m' \geq n'$ ist
eingesetzt wird.

**4.** Makromonomere der Formel I-A

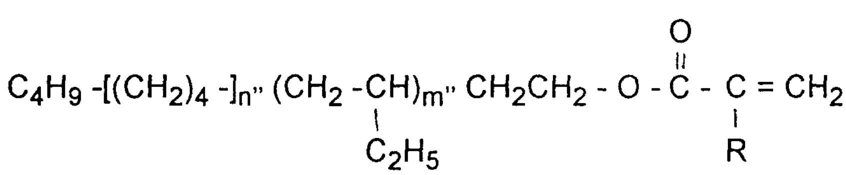 (I-A)

worin

R für Wasserstoff oder Methyl,
n" für eine ganze Zahl von größen als bis 1500 und
m" für eine ganze Zahl mit m" ≥ n"

steht.

5. Verwendung des Kammpolymere gemäß den Ansprüchen 1 bis 3 als Öladditive.

**Claims**

1. Comb polymer based on olefin copolymer macromonomers, **characterised in that** hydrogenated olefin copolymer macromonomers of formula I

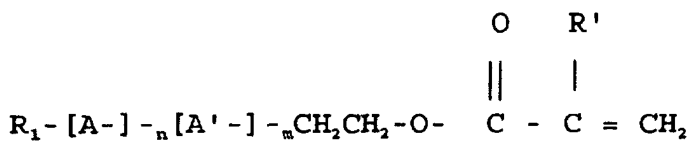 (I)

wherein

R' denotes hydrogen or methyl,
$R_1$ denotes the organic group of a lithium-organic compound,
[A] denotes a segment formed by 1,4-addition of butadiene optionally substituted with a $C_1$-$C_6$ alkyl group,
[A'] denotes a segment formed by vinyl addition of butadiene optionally substituted by a $C_1$-$C_6$ alkyl group,
and n + m denotes an integer from 7 to 3000,
are copolymerised by radical polymerisation with (meth)acrylic ester monomers of formula II

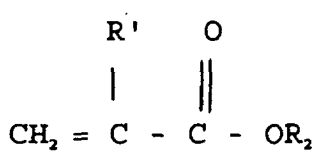 (II)

wherein

R' denotes hydrogen or methyl and
$R_2$ denotes an alkyl group with 1 to 26 carbon atoms.

2. Comb polymers according to claim 1, **characterised in that** apart from the (meth)acrylic ester monomers of formula II, monomers with functional groups in the molecule of formula III

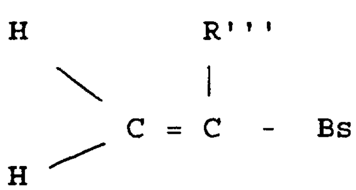 (III)

wherein R''' denotes hydrogen or methyl and Bs denotes an (inert) heterocyclic 5- or 6-membered ring or a group

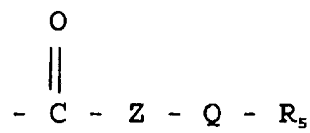

where Z denotes oxygen or an $-NR_4$ group and Q denotes an optionally alkylated hydrocarbon bridge with a total of 2 to 50 carbon atoms, which may be interrupted by oxygen bridges, preferably 2 to 6 C-bridge members, and $R_5$ denotes $OR_6$ or $-NR_7R_8$, where $R_6$ denotes hydrogen or an alkyl group having 1 to 24 carbon atoms or alkyl-substituted aryl groups having $C_1$-$C_{18}$ alkyl substituents and wherein $R_7$ and $R_8$ each denote an alkyl group having 1 to 6 carbon atoms or together may form, together with the nitrogen and optionally other heteroatoms, a heterocyclic 5- or 6-membered ring and wherein $R_4$ denotes hydrogen or an alkyl group having 1 to 6 carbon atoms, are copolymerised in amounts of from 0.5 to 25 wt.% based on the total quantity of monomers.

3. Comb polymers according to claims 1 and 2,
**characterised in that** the olefin copolymer macromonomer used is one of formula I-A

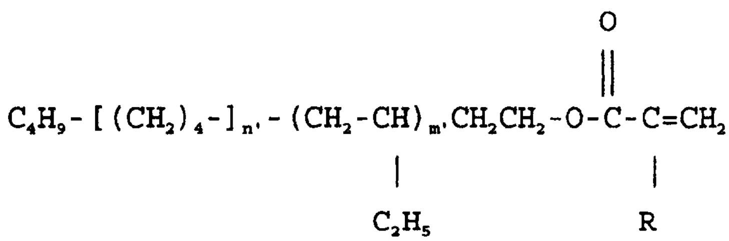

(I-A)

wherein R denotes hydrogen or methyl,
n' denotes an integer from greater than 0 to 3000 and
m' denotes an integer from greater than 0 to 3000,

with the proviso that n' + m' ≥ 10 and m' ≥ n'.

4. Macromonomers of formula I-A

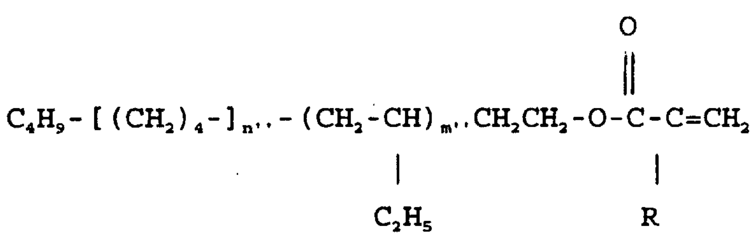

(I-A)

wherein R denotes hydrogen or methyl,
n'' denotes an integer from greater than 0 to 1500 and
m'' denotes an integer where m'' ≥ n''.

5. Use of the comb polymer according to claims 1 to 3 as an oil additive.

## Revendications

1. Polymères à structure en peigne à base de macromonomères copolymères oléfine-copolymères, **caractérisé en ce qu'** on copolymérise des macromonomères oléfine-copolymère, hydrogénés, de formule I

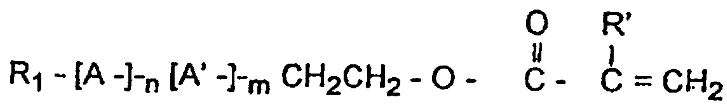 (I)

dans laquelle

R' représente de l'hydrogène ou un méthyle,
$R_1$ représente le reste organique d'un composé organique du lithium,
[A] représente un segment formé par addition 1,4 de butadiène éventuellement substitué par un reste alkyle en $C_1$-$C_6$;
[A'] représente un segment formé par addition vinylique du butadiène éventuellement substitué par un reste alkyle en $C_1$-$C_6$. et
n + m représente un nombre entier allant de 7 à 3000,
avec des monomères d'ester (méth)acrylique de formule II

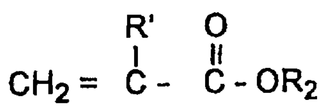 (II)

dans laquelle R' représente de l'hydrogène ou un méthyle
et $R_2$ représente un reste alkyle ayant de 1 à 26 atomes de carbone,

par une polymérisation par voie radicalaire.

2. Polymères à structure en peigne conformément à la revendication 1, **caractérisés en ce qu'** en dehors des monomères d'ester (méth)acrylique de formule II, on copolymérise encore des monomères ayant des groupes fonctionnels dans la molécule, de formule III

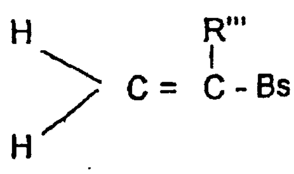 (III)

dans laquelle R''' signifie de l'hydrogène ou un méthyle, et $B_s$ signifie un cycle à 5 ou 6 chaînons, hétérocyclique (inerte) ou un reste

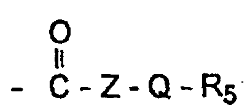

dans lequel Z représente de l'oxygène ou un reste - $NR_4$ et Q représente un pont hydrocarboné éventuellement alkylé ayant au total de 2 à 50 atomes de carbone qui peut être interrompu par des ponts oxygène, de préférence

des éléments de pont ayant de 2 à 6 atomes de carbone, et $R_5$ représente $OR_6$ ou $-NR_7R_8$, dans lesquels $R_6$ représente de l'hydrogène ou un reste alkyle ayant de 1 à 24 atomes de carbone ou des restes aryle ayant des substituants alkyle, en $C_1$ à $C_{18}$ et dans lesquels $R_7$ et $R_8$ représentent respectivement un reste alkyle ayant de 1 à 6 atomes de carbone ou ensemble en impliquant l'azote et éventuellement d'autres hétéro-atomes, peuvent former un cycle hétérocyclique à 5 ou 6 maillons et dans lequel $R_4$ représente de l'hydrogène ou un reste alkyle ayant de 1 à 6 atomes de carbone, en quantités allant de 0,5 à 25 % en poids rapporté à la totalité des monomères.

**3.** Polymères à structure en peigne conformément aux revendications 1 et 2,
**caractérisés en ce que**
comme macromonomère oléfine-copolymère on met en oeuvre un tel de formule I-A

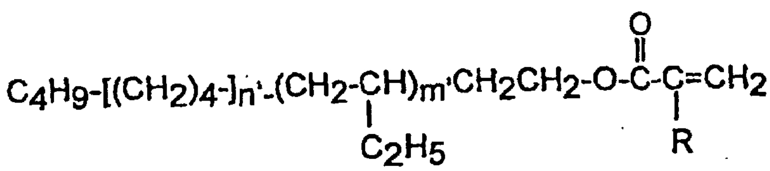

(I-A)

dans laquelle R représente de l'hydrogène ou un méthyle,
n' représente un nombre entier supérieur à 0 à 3000 et
m' représente un nombre entier supérieur à 0 à 3000

avec la précision que n' + m' ≥ 10 et que m' ≥ n'

**4.** Macromonomères de formule I-A

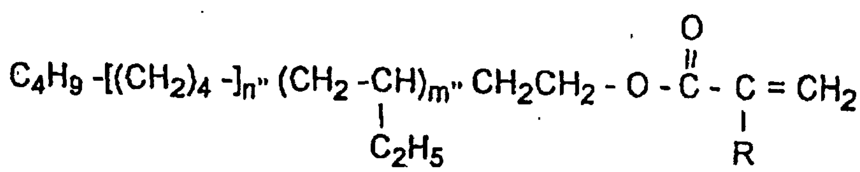

(I-A)

dans laquelle R représente de l'hydrogène ou un méthyle
n" représente un nombre entier supérieur à 0 à 1500 et
m" représente un nombre entier tel que m" ≥ n".

**5.** Utilisation des polymères à structure en peigne conformément aux revendications 1 à 3, en tant qu'additifs pour l'huile.